# EUROPEAN PATENT APPLICATION

(11) **EP 2 270 072 A1**
(43) Date of publication of application: **05.01.2011**
(21) Application number: 09733865.1
(22) Date of filing: 24.04.2009
(51) Int. Cl.: C08G 79/00, C01B 13/32

(54) **HOMO AND HETEROMETALLIC SOLUBLE COORDINATION POLYMERS CONTAINING AN OXALATE LIGAND AND METHOD FOR OBTAINING SPINELS FROM SAME**

(30) Priority: 25.04.2008 ES 200801329
(71) Applicant: Universitat De València, Estudi General, 46010 València (ES)
(72) Inventor: CORONADO MIRALLES, Eugenio, E-46010 Valencia (ES); MARTÍ GASTALDO, Carlos, E-46010 Valencia (ES); GALÁN MASCARÓS, José Ramón, E-46010 Valencia (ES)
(74) Representative: Elzaburu Marquez, Alberto
(86) International application number: PCT/ES2009/070117
(87) International publication number: WO 2009/130359

(57) **Abstract**

Soluble homo and heterometallic coordination polymers based on the oxalate ligand and method for obtaining spinels from them. Homo or heterometallic coordination polymers comprising at least one oxalate ligand are **characterised by** comprising also at least one organic molecule that can stabilise extended structures of metal complexes by the formation of supramolecular interactions so that this polymer is substantially water-soluble and insoluble in organic solvents. These polymers, when in solid state, can generate spinel-type metal oxides or other mixed oxides after thermal oxidation treatment comprising the steps of preparing an alcohol solution of a metal complex comprising at least one oxalate ligand and a metal salt, precipitate this metal complex and this metal salt with a cryptand-type molecule by formation of a coordination polymer which is water-soluble and insoluble in organic solvents, separate the precipitate obtained in the previous step and heat it under oxidising atmosphere at a temperature of at least 350°C until the spinel or the mixed oxide are formed.

## Description

### 1. Field of the invention

This invention relates to homo- or heterometallic coordination polymers based on the oxalate ligand that in solid state, after thermal treatment, allow for generating spinel-type metal oxides, as well as methods for obtaining spinel-type metal oxides from them.

### 2. Object of the invention

This invention discloses new magnetic homo- or heterometallic polymers based on the oxalate ligand with a high water-solubility as well as procedures for synthesizing from them high-purity spinel-type metal oxides as well as other mixed oxides with structures other than the spinel type. This solubility gives rise to a new method for obtaining metal oxides of spinel structure, of molecular formula (M^{II},M^{III})₃O₄, that in some cases show magnetic ordering above room temperature, from thermal oxidation of the matching molecular precursors. The water solubility of the precursors gives a high processability to these molecular compounds, which allows for preparing nanostructures of these precursors and of the final spinels. This opens the way to new applications that cannot be obtained from the other molecular precursors known to date due to their high insolubility in all solvents.

### 3. Background of the invention

Metal oxides with a spinel-type structure have been extensively used in a large number of applications. Many of studies have been published that describe their uses as temperature, pressure or humidity sensors, as well as modulators, low-frequency generators or NTCR thermistors. Their magnetic and electronic properties have made them highly attractive materials, extensively used in the industry of semiconductors. Furthermore, a significant number of colour pigments used in the ceramic industry are based on spinels.

The synthesis of these materials on an industrial scale involves several problems. It requires previous milling of the components (generally transition metal oxides), very high temperatures (above 1100 °C) in ceramic ovens as well as long times of retention of the material in them. All of this involves high energy and time consumption to generate these metal oxides. An added problem resulting from the high temperatures used in industrial synthesis is the inability to obtain some specific compositions due to the high thermal instability of the components. An example of this is the synthesis of derivatives with formula M^{II}Co₂O₄ (cobaltites), that, when heated in the air at temperatures above 400-600°C, break down forming a mixed phase of an M^{II}O oxide and an spinel phase enriched with Co.

According to this, it is not surprising that the scientific class has made a major effort to obtain spinels through mild synthesis procedures with lower energy consumption. Therefore, for instance, US patent US4297333 describes a catalyser for breaking down hypochlorite ions based on nickel oxide (II) and NiCo₂O₄ of spinel type. Precursors are usually inorganic salts, such as nitrides, chlorides, sulphates, etc. or organic salts such as oxalates, stearates, etc. of nickel and cobalt. These compounds react under conditions which allow for obtaining a spinel structure, such as temperatures above 250 °C (preferably between 400 and 800°) at an atmosphere with oxygen to form the catalyser claimed.

Document GB 1160976 describes a process for producing iron oxalates and one or more of the metals manganese, nickel, zinc, and cobalt, where the solid salts of iron or these metals are subject to heating, and are added milled oxalic acid crystals or ammonium, sodium or potassium oxalate crystals. The resulting iron, manganese and zinc oxalate is heated in an oxidising atmosphere containing at least 3% oxygen at temperatures from 200 to 500°C to obtain a manganese-zinc ferrite powder.

The international publication W08702173 describes the preparation of a composition of magnetic oxide based on particles with a spinel structure, that comprises essentially trivalent iron oxide, an oxide of at least one bivalent metal selected among cobalt, iron, zinc, magnesium, nickel, manganese and cadmium (at a percentage of 1-10%) and an additive as alkaline, alkaline-earth, boron, aluminium, etc. oxide, (0.2-0.5%), this process covering the stages of heating in air the relevant mixture of oxalates until they break down and subject the resulting product to a heat treatment (at temperatures of 150-300°C per hours) in an oxidising atmosphere at temperatures of 550-700°C for a period of 10 minutes to 5 hours, reducing the resulting product in a hydrogen atmosphere until the alpha phase Fe₂O₃ disappears and then oxidation of the product obtained by heating at temperatures of 100 to 500°C until the intended composition is obtained, that cools readily.

Lastly, European patent EP0462344 describes a method for preparing an oxide useful as starting material for ferrites that comprises mainly iron, zinc and at least one metal selected among manganese, magnesium, nickel and copper. This oxide is obtained by the addition of a zinc oxide, hydroxide, carbonate or chloride during the calcination of the starting material comprising an aqueous solution containing manganese, nickel and copper, oxidising at high temperatures for obtaining the compound oxide. This method ensures that it is not necessary to use zinc chloride which has a high steam pressure. The resulting oxide contains spinel ferrites with evenly dispersed zinc oxide.

The most successful of these procedures was obtaining spinels by co-precipitation of solid solutions from metal salts. This method is based on the dissolution of metal precursors in aqueous solutions and subsequent precipitation of a mixed metal solid when adding a complexing agent or the generation of a hydroxocomplex induced by modifying the medium pH after adding a base in aqueous solution. However, in this method the degree of heterogeneity at nanometric scale of the spinels produced is usually high due to the nature of the method stages: for instance, should we intend to prepare a spinel of type CoCr₂O₄. In the conventional method, the common procedure would be to provide for instance CrCl₃, CoCl₂ (or any other simple precursor of the metals involved) and mix them in the appropriate stoichiometry. For homogenising the mixture, the solid is crushed mechanically (milling) and then placed in an oven at 1200°C. In these cases, the possibility for a pure spinel to be formed will depend largely on the degree of association of the metals in the burning powder. As it is difficult to reach the degree of atomic homogeneity -if not impossible- through mechanical pathways or up-down strategies, the oxide resulting of the thermal treatment will usually show a high degree of heterogeneity at nanometric scale, i.e., it may show phase mixtures. In addition, the procedures disclosed to date are based on metal precursors with a high insolubility in all solvents, which makes that the processability and versatility of these procedures is substantially reduced: to date, all the compounds obtained by the coprecipitation method which allowed for generating spinels by subsequent calcination are highly insoluble compounds with a low crystallinity. These characteristics are derived from the method used for obtaining them: immediate precipitation by addition of a complexing agent or a modification of the pH of the medium where the relevant metal salts are dissolved. The insolubility of these compounds in common solvents limits largely their scope of application.

### 4. Summary of the invention

Consequently, the problem to be solved in this invention is to provide new methods for obtaining spinels or other mixed oxides with a higher processability and versatility than those existing to date, allowing also for obtaining new spinels and removing the need for extremely costly phases in time or energy, including milling or heating at temperatures up to 1200°C.

This problem has been solved by the inventors using the metal precursors of spinels of the invention and the method for obtaining spinels of the invention, used by the inventors to establish that spinel precursor coordination polymers formed by homo- or heterometallic oxalate networks and molecules of crown ether type with a defined structure and composition can be formed. The crown ether, through interactions by hydrogen bonding, stabilises the network and allows for isolating a well-defined coordination polymer where the metals are associated on a controlled basis. Therefore, as the oxidation occurs in the method of the invention in a coordination polymer with a defined structure and composition, where the metals are associated on a controlled basis, i.e., with all atoms distributed periodically, with regular stoichiometry, the control degree obtained is maximum (bottom-up strategy), which would lead to a greater purity of the final product.

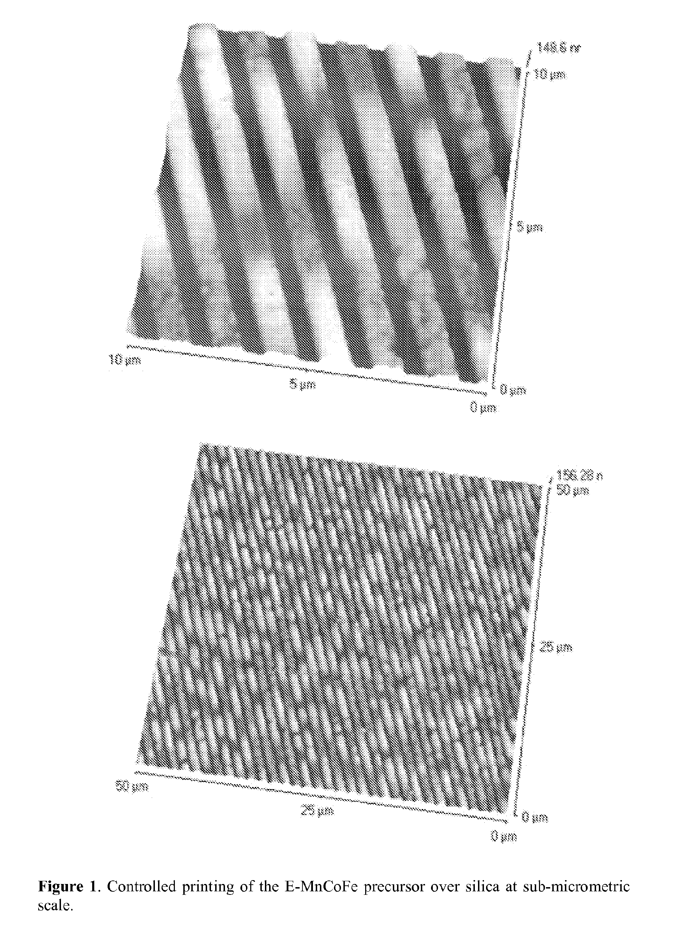

Water-solubility is a very important characteristic of the metal precursors of the spinels of the invention, which distinguishes them from all the previous spinel metal precursors. The molecular design of the new coordination polymers of the invention has made them water solubility, thus extending the spectrum of application of the spinels in several fields. Obtaining stable aqueous solutions of spinel precursor compounds allows for improving substantially the processing of these materials. For instance, we can obtain new spinels with magnetic and/or optic properties, prepare nanoparticles of controlled size and composition spinels, use the solutions of these metal complexes as ceramic inks or prepare magnetic nanostructures organised sub-micrometrically or even nanometrically (see Figure 1).

Consequently, one part of the invention deals with a homo- or heterometallic coordination polymer which comprises at least one oxalate ligand, that in solid state can generate spinel-type metal oxides or other mixed oxides after thermal oxidation treatment, characterised by also comprising at least one organic molecule that can stabilise extended structures of metal complexes by formation of supramolecular interactions so that this polymer is substantially water-soluble and insoluble in organic solvents.

A second part of the invention deals with a method for obtaining spinel-type metal oxides comprising the following steps:
a) prepare an alcohol solution of at least one metal complex comprising at least one oxalate ligand and at least one metal salt, the metal in the metal complex being the same or different from the metal salt metal;
b) precipitate at least one metal complex comprising at least one oxalate ligand and at least one metal salt, in alcohol solution, from step a) with a cryptand-type molecule by formation of a coordination polymer soluble in water and insoluble in organic solvents;
c) separate the precipitate obtained in step b) and heat it under oxidising atmosphere at a temperature of at least 350°C to the formation of the spinel.

As stated, the metal in the metal complex can be the same or different from that of the metal salt. If both metals are the same, the mixture (and consequently the resulting polymer) will be homometallic; when they are different it will be heterometallic.

Lastly, a third part of the invention deals with uses of the coordination polymers according to the invention in obtaining thin layers or Langmuir-Blodgett films, in the encapsulation of these complexes in solid or polymeric matrices, in obtaining nanoparticles of metal oxides, and in nanostructuring of spinels (an example of which is shown in Figure 1) through nanolithography or ink-jet printing techniques.
Therefore, the provision of homo- or heterometallic coordination polymers of the invention comprising at least one oxalate ligand and at least one cryptand-type molecule, that are substantially water-soluble as well as the procedure for obtaining the spinels of the invention from them offer the advantages of providing an easier, more effective, versatile method for obtaining spinels than those known in the previous state of the art, thus removing the need for extremely costly intermediate steps (either in terms of time, either of energy) such as milling solid mixtures or heating them at high temperatures of up to 1200°C, giving rise to high-purity spinels.

In the method of the invention, the metal complex comprising at least one oxalate ligand and the metal salt, that are soluble in an alcohol, such as methanol, and therefore are in an alcohol solution, are precipitates with a molecule that is able to stabilise extended structures of metal complexes by the formation of supramolecular interactions, e.g., hydrogen bonds, such as a crown ether, and in particular 18-crown-6. The addition of the crown ether to the complex comprising oxalate ligands causes the formation of a coordination polymer soluble in water and insoluble in alcohol, and that, therefore, precipitates in the alcohol medium of the metal complex comprising oxalate ligands. This addition of cryptand molecules (crown ether) to the extended systems resulting of assembling metal units through the oxalate bond allows for obtaining a coordination polymer where all metals are well ordered in the precipitated solid. Once the precipitated coordination polymer is formed, a spinel-type oxide or other high-purity mixed oxides can be obtained by thermal breakdown thereof. Depending on the conditions under which this thermal breakdown is performed, materials of various natures can be obtained: heating under oxidising atmosphere induces generation of metal oxide particles with subsequent oxidation of the organic ligand to volatile species (CO₂); otherwise, heating under a reducing atmosphere induces formation of metal particles and subsequent reduction of the ligand (generation of CO).

Clearly, the chemical nature of these mixed metal oxides requires heating under oxidising atmosphere for their formation, such as room temperature. However, not all mixed metal complexes obtained through the coprecipitation method are valid for generation of spinels. The main requirement to be met is strictly chemical. According to the chemical formula of the spinels, M^{II}M^{III}₂O₄, an adequate control of the chemical nature and redox properties of the metals which are part of the precipitated complex to be subject to subsequent thermal oxidation allows for obtaining spinels successfully. Stoichiometry of the metals in the precursor complex is also a key parameter for the generation of spinels successfully. This latter requirement causes most experimental problems due to the difficult control in the chemical nature of the species obtained after the coprecipitation step and, therefore, the control of stoichiometry of metals in them. This limitation causes that many times it is very difficult to obtain pure spinel-type metal oxides. Instead of this, the calcination process generates a solid formed by a mixture of oxides at percentages changing based on the temperature used in the oxidation process. This is induced by the high heterogeneity of the solid solutions obtained by fast precipitation of metal salts in the molecules The variable concentration of metals in different areas of the sample to be subsequently calcined causes that the resulting products are mixes of phases instead of a pure metal oxide. On the contrary, the use of the coordination polymers of the invention for this purpose means a major advance according to the homogeneity of these compounds in the molecule as a result of the ordered distribution of the metal ions.

This descriptive report describes both the new molecular heterometallic coordination polymers based on the oxalate ligand which allow for obtaining spinels, and the procedure which allows for synthesizing these spinels from the new water-soluble metal complexes of the invention. The identity of the metals which are part of these compounds can be modified at will by an adequate control of the chemical nature of the compounds formed. This control on the stoichiometry and identity of the metals in the chemical compounds obtained allows for predicting easily the identity of the spinel that will be generated by subsequent calcination. Thus, for instance, examining the metals that will form the coordination polymer and their high or lower ability to be oxidised under the conditions used for generating spinels (i.e., their redox properties), the metal complexes mixed in methanol shall be thus selected, adding subsequently to them the crown ether to generate the coordination polymers of the invention.

In Inorganic Chemistry, vol. 44, pages 6197-6202, the inventors have disclosed coordination compounds with similarities to those of the present invention. However, their structures are completely different, as the compounds disclosed in said article are monodimensional compounds organised in a structure of three segregated layers, formed respectively by units [K(18-crown-6 ether)]⁺ (layer A), complexes [Mn(H₂O)₂Cr(ox)₃]⁻ (layer B) and neutral molecules of 18-crown-6 ether (layer C), with a repetition pattern BCBA. Consequently, the structure of these compounds includes anion coordination polymers associated with cation complexes compensating the charge. On the contrary, the compounds of the present invention are bidimensional coordination polymers formed by transition metals linked by bis-bidentate oxalate bonds that are also neutral systems, where the presence of an anion is not necessary for compensating the charges. In addition, the presence in the compounds disclosed in said article of a component such as K yields formation of mixtures of oxides instead of a single pure phase, so the target of obtaining spinel oxides or other high-purity mixed oxides by thermal breakdown would not be achieved.

In conclusion, the water-soluble coordination polymers of the invention as well as the associated method for preparing spinels thus allow for obtaining new spinels, for instance, of a given size and composition that could not be obtained with the procedures known to date, and provide a simplified, more practical, versatile, effective method yielding more high-purity spinels than known conventional methods.

### 5. Brief description of the figures

**Figure 1****.** Controlled deposition at sub-micrometric scale of an aqueous solution of the precursor E-MnCoFe over capillaries applied over a silica surface making use of lithographic and moulding techniques by microinjection. (Study conducted in collaboration with M. Cavallini, CNR-ISMN, Università di Bologna).
**Figure 2****.** Picture that shows the magnet behaviour at room temperature of the spinel (Mn,Co,Fe)₃O₄ generated by thermal breakdown under ambient atmosphere of the precursor E-MnCoFe.
**Figure 3****.** X-ray diffraction over powder obtained for all spinels generated by thermal treatment on molecular precursors 1-6, that confirms the purity of the phases obtained.
**Figure 4****.** Aqueous solution obtained after dissolving 300 mg of the complex E-MnCoFe in 5 mL of deionised water.

### 6. Detailed description of the invention

The new molecular materials synthesized as well as the procedure used for obtaining them are described below.

| | ***Name*** | ***Components*** | ***Stoichiometric ratio*** | ***Spinel formed*** |
|---|---|---|---|---|
| ***1*** | E-MnMnCr | C, H, O, Mn, Cr | Mn:Cr (1.5:1) | (Mn,Cr)₃O₄ |
| ***2*** | E-NiMnCr | C, H, O, Ni, Mn, Cr | Ni:Mn:Cr (1.5:1.5:2) | (Ni,Mn,Cr)₃O₄ |
| ***3*** | E-NiCoCr | C, H, O, Ni, Co, Cr | Ni:Co:Cr (1.5:1.5:2) | (Ni,Co,Cr)₃O₄ |
| ***4*** | E-CoCoCr | C, H, Ni, Co, Cr | Co:Cr (1.5:1) | (Co,Cr)₃O₄ |
| ***5*** | E-MnCoFe | C, H, O, Mn, Co, Fe | Mn:Co:Fe (1.5:1.5:2) | (Mn,Co,Fe)₃O₄ |
| ***6*** | E-MnMnFe | C, H, O, Mn, Fe | Mn:Fe (1.5:1) | (Mn,Fe)₃O₄ |

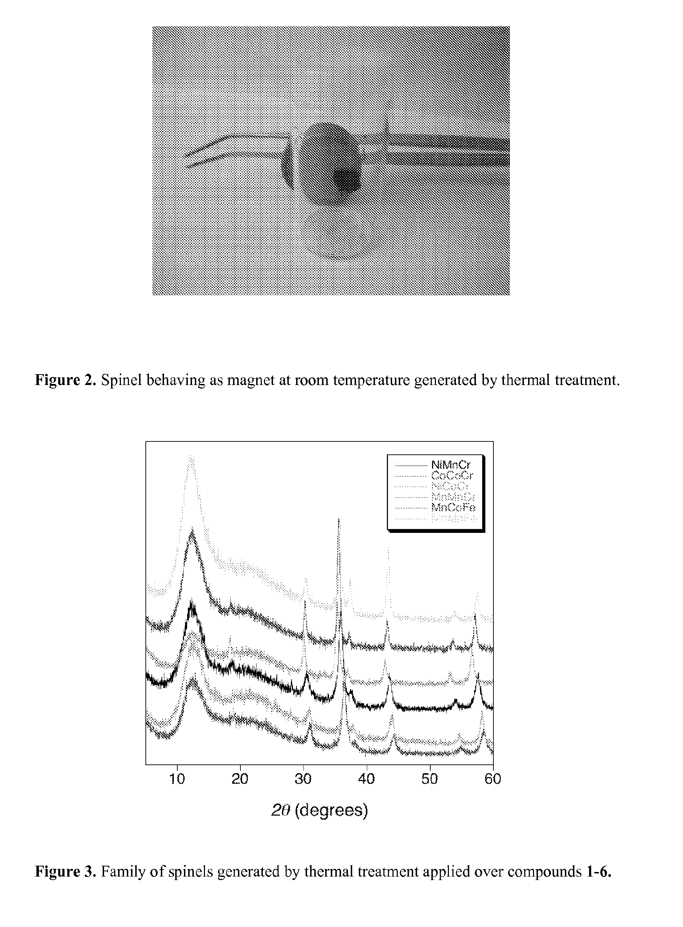

All chemical compounds used in the synthesis of the products **1-6** were used without performing any additional purification. The compounds Ag₃[Cr(C₂O₄)₃] and Tl₃[Fe(C₂O₄)₃] were prepared by metathesis on previously described compounds.
**1. E-MnMnCr.** A methanol solution of Ag₃[Cr(C₂O₄)₃] and MnCl₂•4H₂O was prepared at a stoichiometric ratio of 1:1.5. It is kept under constant stirring for about 15 minutes. Filter the white AgCl(s) formed in the previous step, transferring the resulting purple solution to a beaker. To this methanol solution, where both complexes (and therefore their respective metals) are in dissolution, add 18-crown-6 (C₁₂H₂₄O₆) in solid state, on a controlled and constant basis. Once the addition is completed, stir mechanically the crude reaction product. When the crown ether is added, all compounds are assembled in dissolution, generating the coordination polymer that is water-soluble but methanol-insoluble. As a result, after a few minutes a purple solid starts to appear; keep stirring for 60 minutes approximately to ensure quantitative formation of the final product. Vacuum filter the solid form, wash with cold MeOH and vacuum dry for one night.
   Distribute evenly the solid obtained in a porcelain navette. Place in an oven at room temperature. Heat to 450°C with a thermal ramp of 5°C/min. Keep the solid at this temperature for 60 minutes, allow to cool at room temperature with a thermal ramp of -10°C/min. After thermal treatment, isolate a spinel-type metal oxide with formula (Mn,Cr)₃O₄.
**2. E-NiMnCr.** Prepare a methanol solution of Ag₃[Cr(C₂O₄)₃] together with MnCl₂•4H₂O and NiCl₂•6H₂O following the same process as for the preparation of compound 1 and using a stoichiometric ratio of 2:1.5:1.5. The synthesis continues through the same steps described in the above compound. Once product precipitation is completed, vacuum filter the solid formed, wash with cold MeOH and vacuum dry overnight.
   The solid obtained is subject to a thermal treatment analogue to that used in the above case, leading to the generation of a spinel-type metal oxide with formula (Ni,Mn,Cr)₃O₄.
**3. E-NiCoCr.** Prepare a methanol solution of Ag₃[Cr(C₂O₄)₃] together with CoCl₂•6H₂O and NiCl₂•6H₂O using a stoichiometric ratio of 2:1.5:1.5 and following the same process as for the preparation of compound 1. The synthesis continues through the same steps described in the above compound. Once product precipitation is completed, vacuum filter the solid formed, wash with cold MeOH and vacuum dry overnight.
   The solid obtained is subject to a thermal treatment analogue to that used in the above case, leading to the generation of a spinel-type metal oxide with formula (Ni,Co,Cr)₃O₄.
**4. E-CoCoCr.** Prepare a methanol solution of Ag₃[Cr(C₂O₄)₃] together with CoCl₂•6H₂O following the same process as for the preparation of compound 1 and using a stoichiometric ratio of 1:1.5:1.5. The synthesis continues through the same steps described in the above compound. Once product precipitation is completed, vacuum filter the solid formed, wash with cold MeOH and vacuum dry overnight.
   The solid obtained is subject to a thermal treatment analogue to that used in the above case, leading to the generation of a spinel-type metal oxide with formula (Co,Cr)₃O₄.
**5. E-MnCoFe.** Prepare a methanol solution after dissolving the precursors: Tl₃[Fe(C₂O₄)₃], CoCl₂•6H₂O and MnCl₂•4H₂O at a stoichiometric ratio of 2:1.5:1.5. Keep the crude reaction product under stirring for about 15 minutes. Filter the solution by gravity to remove the TlCl(s) salt formed during the process. Add 18-crown-6 in solid state on a controlled basis over the fresh solution. Keep the mixture under mechanical stirring. After about 5 minutes, a precipitate is seen to be formed, keep stirring for 60 additional minutes to ensure quantitative product formation. Once the reaction is completed, vacuum filter the solid formed, wash with cold MeOH and vacuum dry overnight.
   The solid obtained is subject to a thermal treatment analogue to that used in the above case, leading to the generation of a spinel-type metal oxide with formula (Mn,Co,Fe)₃O₄. The oxide formed behaves as a magnet at room temperature (see Figure 2).
**6. E-MnMnFe.** Prepare a methanol solution of Tl₃[Fe(C₂O₄)₃] together with MnCl₂•6H₂O following the same process as for the preparation of compound **5** and using a stoichiometric ratio of 1:1.5. The synthesis continues through the same steps described in the above compound. Once product precipitation is completed, vacuum filter the solid formed, wash with cold MeOH and vacuum dry overnight.
   The solid obtained is subject to a thermal treatment analogue to that used in the above case, leading to the generation of a spinel-type metal oxide with formula (Mn,Fe)₃O₄.

The above tests were performed using the compounds Ag₃[Cr(C₂O₄)₃] and Tl₃[Fe(C₂O₄)₃] as precursors. However, it is believed that complexes such as Tl₃[Ru(C₂O₄)₃] or Tl₃[Rh(C₂O₄)₃] would act substantially in the same way in the present invention.

Similarly, in the tests performed methanol has been used in all cases as alcohol medium to dissolve the coordination complex comprising oxalate. However, the inventors believe that other alcohol media could also be used in the method of the invention, while the oxalate coordination complex is soluble in them.

It must be also highlighted that the temperature of the last calcination step where the spinel is obtained is not critical, and temperatures up to 1200°C can be used, where the spinel shall continue to be formed. However, as these higher temperatures involve greater energy consumption, lower temperatures are considered to be preferable in the method of the invention, such as a range from 350°C to 500°C. In fact, at temperatures around 350-400°C the spinel phase starts to be formed, though in most tests 450°C has been used as set-point temperature.

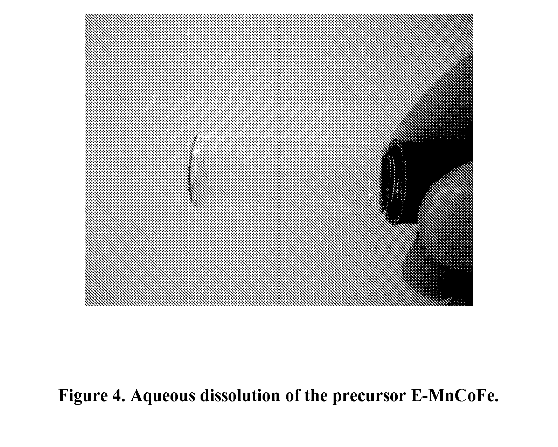

In a step prior to thermal treatment, solubility tests were performed for all compounds synthesized. All compounds tested were found to be water-soluble. Dissolutions of controlled concentrations ([1g/20mL]) were prepared, verifying that they were stable for time periods exceeding 24 hours (see Figure 4). The dissolution of these compounds does not affect the characteristics necessary for subsequent generation of spinels. In fact, it was found that, after dissolution and kept in dissolution for long time periods, they could be retrieved again after removing the solvent. The thermal treatments were tested over the solids retrieved leading to the same spinel type species. This confirms the high processability of these materials and the high number of applications that could result of this property.

The high water solubility of the metal complexes of the invention allows for using them in applications where the complex generating the spinels should be water-soluble, as they offer the advantage that the assembly with the crown ether is broken when the polymer is suspended in water and is dissolved. These applications include obtaining nanostructured systems of nanoparticle type, for instance in obtaining thin layers or Langmuir-Blodgett films, in the encapsulation of these complexes in solid or polymer matrices, in obtaining metal oxide nanoparticles or in obtaining sub-micro or nanostructured spinels over surfaces through lithographic or ink-jet printing techniques.

## Claims

1. Homo or heterometallic coordination polymer comprising at least one oxalate ligand, that in solid state is able to generate spinel-type metal oxides or other mixed oxides after thermal oxidation treatment, **characterised in that** the coordination polymer metal(s) are solely transition metals and wherein the coordination polymer also comprises at least one organic molecule able to stabilise extended structures of metal complexes by formation of supramolecular interactions, so that the polymer is substantially water-soluble but insoluble in organic solvents.

2. Coordination polymer according to claim 1, wherein the supramolecular interactions are hydrogen bonds.

3. Coordination polymer according to any of claims 1 or 2 above wherein the organic molecule able to stabilise extended structures of metal complexes is a cryptand-type molecule.

4. Coordination polymer according to claim 3 wherein the cryptand-type molecule is a crown ether.

5. Coordination polymer according to claim 4 wherein the crown ether is 18-crown-6.

6. Method for obtaining spinel-type metal oxides or other mixed oxides comprising the following steps:
a) preparing an alcohol solution of at least one metal complex comprising at least one oxalate ligand and at least one metal salt, the metal in the metal complex being the same or different from the metal salt metal;
b) precipitating said at least one metal complex comprising at least one oxalate ligand and at least one metal salt, in alcohol solution, from step a) with a cryptand-type molecule by formation of coordination polymer soluble in water and insoluble in organic solvents;
c) separating the precipitate obtained in step b) and heating it under oxidising atmosphere at a temperature of at least 350°C to the formation of the spinel or the mixed oxide.

7. Method for obtaining spinel-type metal oxides or other mixed oxides according to claim 6, wherein the alcohol solution of the homo or heterometallic coordination complex comprising at least one oxalate ligand of step a) is obtained by reacting Ag₃[Cr(C₂O₄)₃] in methanol solution with at least one metal chloride and then separating the AgCl precipitate formed.

8. Method for obtaining spinel-type metal oxides or other mixed oxides according to claim 6, wherein the alcohol dissolution of the homo or heterometallic coordination complex comprising at least one oxalate ligand of step a) is obtained by reacting Tl₃[Fe(C₂O₄)₃], Tl₃[Ru(C₂O₄)₃] or Tl₃[Rh(C₂O₄)₃] in methanol solution with at least one metal chloride and then separating the TlCl precipitate formed.

9. Method for obtaining spinel-type metal oxides or other mixed oxides according to claims 7 or 8 above wherein the metal chloride is a transition metal chloride.

10. Method for obtaining spinel-type metal oxides or other mixed oxides according to claim 9 wherein the transition metal chloride is selected from the group consisting of MnCl₂·4H₂O, NiCl₂·6H₂O, CoCl₂·6H₂O, or their mixtures.

11. Method for obtaining spinel-type metal oxides or other mixed oxides according to any of claims 6-10 above wherein the cryptand-type molecule is a crown ether.

12. Method to obtain spinel-type metal oxides or other mixed oxides according to claim 11 wherein the crown ether is 18-crown-6.

13. Method for obtaining spinel-type metal oxides or other mixed oxides from a coordination complex according to any of claims 6-12 above wherein step c) is performed at a temperature from 350°C to 500°C.

14. Method for obtaining spinel-type metal oxides or other mixed oxides from a coordination complex according to claim 13 above wherein step c) is performed under room temperature and applying to the precipitate a thermal ramp of 5°C/min from room temperature to 450°C, then keeping the temperature of 450°C for one hour and finally allowing to cool at room temperature with a thermal ramp of -10°C/min.

15. Use of a coordination polymer according to any of claims 1-5 above in obtaining thin layers or Langmuir-Blodgett films.

16. Use of a coordination polymer according to any of claims 1-5 above in encapsulation of these coordination complexes in solid or polymer matrices.

17. Use of a coordination polymer according to any of claims 1-5 above in the production of composites or obtaining nanoparticles of metal oxides.

18. Use of a coordination polymer according to any of claims 1-5 above in obtaining sub-micro or nanostructural spinels over surfaces through lithographic or ink-jet printing techniques.
